# EUROPÄISCHE PATENTSCHRIFT

(11) **EP 3 545 801 B1**
(45) Veröffentlichungstag und Bekanntmachung des Hinweises auf die Patenterteilung: **12.05.2021**
(21) Anmeldenummer: 19162594.6
(22) Anmeldetag: 13.03.2019
(51) Int. Cl.: A47J 31/44, A47J 31/46, A47J 31/36

(54) **GETRÄNKEZUBEREITUNGSMASCHINE MIT RESTWASSERDRAINAGE**
BEVERAGE MACHINE WITH DRAINING MEANS FOR RESIDUAL WATER
MACHINE À BOISSON AVEC SYSTÈME DE DRAINAGE POUR EAU RÉSIDUELLE

(30) Priorität: 29.03.2018 DE 102018204906
(43) Veröffentlichungstag der Anmeldung: 02.10.2019
(73) Patentinhaber: BSH Hausgeräte GmbH, 81739 München (DE)
(72) Erfinder: Quittek, Benno, 83278 Traunstein (DE); Ostermaier, Albert, 83371 Stein a.d. Traun (DE)

(56) Entgegenhaltungen:
- EP-A1- 2 170 132
- EP-A1- 3 253 263
- US-A1- 2006 065 128

## Beschreibung

Die Erfindung bezieht sich auf eine Getränkezubereitungsmaschine, insbesondere für den Hausgebrauch, für Heißgetränke, insbesondere für Kaffee oder Tee, mit einem Brühtopf zur Aufnahme von Brühgut und einem relativ zum Brühtopf verschiebbaren Kolben zum Auswerfen des Brühguts. Der Brühtopf umfasst einen Drainageauslass zur Drainage von Restwasser aus dem Brühtopf.

Aus der DE 50 2011 006 952 D1 ist eine Brühvorrichtung mit einer Drainageventil-Einheit bekannt, welche in einer Brühwasser-Zufuhrleitung vorgesehen ist. Beim Nachpressen extrahiertes Restwasser strömt aus der Brüheinheit über das Drainageventil in eine Drainageleitung. Nachteilig an einer solchen Ausgestaltung ist, dass Brühgutpartikel aus der Brüheinheit in das Drainageventil gelangen können. Diese Partikel können Probleme im gesamten Fluidsystem der Brühvorrichtung verursachen.

Aus der EP 2 170 132 A1 und der US 2006/065128 A1 sind Getränkezubereitungsmaschinen mit einem Brühtopf, einem verschiebbaren Kolben und einem Drainageauslass bekannt.

Es ist Aufgabe der Erfindung, das Auspressen von Brühgut nach dem Brühvorgang insbesondere dahingehend zu verbessern, dass zuverlässig vergleichsweise viel Restwasser aus dem Brühgut extrahiert und ein Rücksaugen von Restwasser verhindert wird. Dies soll vorzugsweise mit einfachen und robusten Mitteln erreicht werden, die möglichst keinen oder nur einen geringen Einfluss auf die Herstellkosten und/oder den Bauraum der Maschine haben.

Die Aufgabe wird mit einer Getränkezubereitungsmaschine der oben genannten Art erfindungsgemäß dadurch gelöst, dass der Kolben dazu eingerichtet ist,
i) in einer ersten Position bzw. Drainageposition des Kolbens den Drainageauslass freizugeben und
ii) in einer zweiten Position bzw. Brühposition des Kolbens den Drainageauslass zu verschließen.

Der Brühtopf bzw. Brühzylinder (nachstehend wird vereinfachend der Begriff "Brühtopf" verwendet, der beide Begriffe umfassen soll) bildet mit einem Brühkolben die Brühkammer der Getränkezubereitungsmaschine aus. Darin wird das Brühgut - Tee oder Kaffee als loses Mehl oder in Pads - bei der Getränkezubereitung mit Flüssigkeit und/oder Dampf beaufschlagt. Im Brühtopf ist das Brühgut zumindest während des Brühvorgangs aufgenommen.

Der Brühkolben und der Brühtopf sind relativ zueinander verschiebbar ausgebildet. Dabei kann der Brühkolben ortsfest und der Brühtopf bewegbar ausgebildet sein. Alternativ oder zusätzlich kann der Brühtopf ortsfest und der Brühkolben bewegbar ausgebildet sein. Die Relativbewegung von Brühkolben und Brühtopf zueinander kann beispielsweise durch eine Spindel erfolgen. Die Relativbewegung kann beispielsweise im Wesentlichen (d. h. bis auf für die Funktion unbedeutenden Abweichungen) entlang der Längsachse des Brühtopfs erfolgen, wobei die Längsachse im Wesentlichen senkrecht, geneigt oder horizontal orientiert sein kann.

Der Brühtopf umfasst erfindungsgemäß einen Brühtopfboden sowie in der Regel eine zylindrische Brühtopfseitenwand. Zweckmäßig kann der Brühtopfboden als Kegelstumpf bzw. Trichter ausgebildet sein.

Der Brühtopf umfasst mindestens einen Drainageauslass zur Drainage von Restwasser aus dem Brühtopf in die Umgebung während des Auspressens des Brühguts. Beim Auspressen oder Nachpressen des Brühguts wird überschüssiges Brühwasser oder Restwasser nach dem Brühvorgang aus dem Brühgut entfernt. Die Umgebung ist ein Ort außerhalb der Brühkammer und außerhalb des Fluidsystems, aber innerhalb der Getränkezubereitungsmaschine, in dem das Restwasser zur späteren Entsorgung aufgefangen wird.

Erfindungsgemäß kann der Drainageauslass in der Einbaulage des Brühtopfs an dessen tiefster Stelle angeordnet sein, so dass das Restwasser zumindest durch die Schwerkraft begünstigt vollständig abströmen kann. Damit können Zusatzantriebe zur Abfuhr des Restwassers entfallen. Bei einem im Wesentlichen senkrechten bzw. geneigten Verfahrweg zur Realisierung der Relativbewegung des Brühkolbens und des Brühtopfs kann der Drainageauslass beispielsweise im Brühtopfboden angeordnet sein. Beim im Wesentlichen horizontalen Verfahrweg indessen kann der Drainageauslass in der Brühtopfseitenwand bzw. im Übergang vom Brühtopfboden zur Brühtopfseitenwand angeordnet sein.

Die Getränkezubereitungsmaschine umfasst einen Kolben, der relativ zum Brühtopf verschiebbar ist. Der Kolben dient u. a. zum Auswerfen des Brühguts nach dem Brühvorgang. Die Auswurfposition stellt regelmäßig eine obere bzw. erste Endposition des Verschiebewegs bzw. Verfahrwegs des Kolbens dar.

Bevorzugt ist eine Kolbenfläche des Kolbens mit mindestens einem Restwasserloch und bevorzugt mit einer Vielzahl an Restwasserlöchern perforiert, sodass ausgepresstes Restwasser aus dem Brühgut während des Auspressens durch die Kolbenfläche hindurch entweichen kann.

Zweckmäßig liegt der Kolben in der Brühposition direkt oder indirekt auf dem Brühtopfboden auf und verdeckt in der Brühposition den Drainageauslass, sodass jener abgedichtet ist. In der Drainageposition dagegen ist der Kolben derart beabstandet vom Brühtopfboden angeordnet, dass sich zwischen dem Brühtopfboden und dem Kolben ein Abflusskanal oder eine Abflusspassage für das Restwasser ausbildet. Der Abflusskanal ist dabei bevorzugt der Gestalt, dass das aus dem Brühgut ausgepresste Restwasser ohne Zusatzmaßnahmen abfließen kann, beispielsweise allein aufgrund der Schwerkraft und insbesondere durch den an der tiefsten Stelle vorgesehenen Drainageauslass. Daher ist für einen ausreichenden Luftzutritt in den Abflusskanal gesorgt, sodass sich der Kolben in der Drainageposition als belüftetes Sieb bezeichnen lässt. Ein separater, also zusätzlich zum Drainagekanal möglicher Luftzutritt kann z.B. durch das Mehrwegeventil hindurch sichergestellt werden.

In der Auswurfposition schließlich ist der Kolben weiter vom Brühtopfboden beabstandet als in der Drainageposition.

Erfindungsgemäß umfasst der Kolben eine Kolbenstange, mittels der der Kolben im Wesentlichen parallel zur Längsachse des Brühtopfs verschiebbar sein kann. Die Kolbenstange dient dazu, den Kolben an ein außerhalb des Brühtopfs vorgesehenes Antriebselement zu koppeln. Sie ist erfindungsgemäß durch ein im Brühtopfboden ausgebildetes Durchgangsloch hindurchgeführt. In einer besonders bevorzugten Ausgestaltung bildet das Durchgangsloch zugleich den obigen Drainageauslass mit aus. Zweckmäßig ist ein kreisringförmiger Auslass für das Restwasser ausgebildet. Er ist ausreichend groß dimensioniert, um einerseits das Restwasser zuverlässig und insbesondere ohne Rückstau abzuführen, und um andererseits ein Einströmen von Luft zu ermöglichen. Ein solcher Aufbau lässt sich besonders einfach und platzsparend realisieren.

Alternativ oder zusätzlich kann der Brühtopf einen separat zum Durchgangsloch ausgebildeten Drainageauslass aufweisen. Beispielsweise kann hierzu ein separater Auslass, z.B. eine separate Durchgangsbohrung in der Brühtopfseitenwand vorgesehen sein, den der Kolben in seinen unterschiedlichen Positionen freigibt bzw. verschließt. Damit benötigt die Drainage keine zusätzlichen Betätigungselemente und ist daher platzsparend, kostengünstig und wartungsarm.

Der Erfindung nutzt also die ohnehin stattfindende Bewegung des Kolbens zwischen seiner Brüh- und Auswurfposition, um ihm beim Drainageprozess eine weitere Funktion hinzuzufügen. Der Kolben lässt sich erfindungsgemäß quasi zu einem Teil eines Drainageventils machen, das in der Brühposition verschließt und in einer Drainageposition öffnet, bevor der Kolben in die Auswurfposition übergeht.

Besonders bevorzugt ist an dem Drainageauslass mindestens eine Dichtung vorgesehen, die dazu ausgelegt ist, insbesondere während einer Brühphase den Drainageauslass gegenüber der Kolbenstange oder gegenüber dem Kolben abdichtend zu verschließen, insbesondere wenn der Kolben in der Brühposition zumindest teilweise direkt oder indirekt am Brühtopfboden anliegt, und insbesondere während des Auspressens des Brühguts in der Drainageposition den Drainageauslass freizugeben, insbesondere sobald der Kolben vom Brühtopfboden beabstandet ist.

Bevorzugt kann die Kolbenstange in einem Drainageabschnitt einen lokalen oder umlaufenden verjüngten Bereich an ihrem Mantel aufweisen, der einen geringeren Durchmesser hat als ein Dichtabschnitt der Kolbenstange. Jener ist zweckmäßig eingerichtet, zumindest in der Brühposition dichtend an der Dichtung anzuliegen, während jedenfalls in der Drainageposition einen Durchfluss von Restwasser möglich ist. Damit lässt sich mit einfachen Mitteln einerseits in der Brühposition eine Druckvorspannung der Dichtung an der Kolbenstange und andererseits in der Drainageposition ein ausreichender Durchflussquerschnitt erreichen.

Erfindungsgemäß muss das Restwasser beim Auspressen nicht über das Fluidsystem, das die Brühkammer mit Brühwasser versorgt, zurückströmen. Vielmehr kann der Drainageauslass einen parallelen Strömungspfad zum Brühwassereinlass des Brühtopfs ausbilden, sodass das Restwasser insbesondere nicht über den Brühwassereinlass des Brühtopfs in die Umgebung ausströmt. Es handelt sich also nicht um geometrische Parallelität, sondern um eine Parallelschaltung zweier Strömungspfade. Somit kann ein negativer Einfluss von rückströmendem Brühgut auf das Fluidsystem vermieden werden.

Das Drainage-Restwasser kann alternativ auch über ein mit dem Brühwassereinlass fluidverbundenes Mehrwegeventil geführt werden. Günstigerweise kann hierzu ein Leitungsabschnitt für das Restwasser im Mehrwegeventil und stromab von ihm mit einem Querschnitt vorgesehen sein, der mindestens um 30% oder 50% oder 100% größer ist als die Leitungsquerschnitte des Fluidsystems stromauf des Mehrwegeventils. Der Ablauf des Restwassers erhält damit quasi eine Freispiegelleitung. Damit kann die Leitung ausreichend belüftet werden, sodass ein Kapillareffekt unterbunden werden kann, der anderenfalls ein vollständiges Entleeren einer Leitung mit geringerem Querschnitt verhindert und für ein Zurücksaugen von Restwasser in den Trester führen könnte. Damit kann das Restwasser leitungsgeführt zum Beispiel in eine Restwasserschale gelangen.

Die Kolbenstange und der Brühtopf können direkt oder indirekt eine zumindest unidirektional formschlüssige Verbindung ausbilden. Formschlüssige Verbindungen entstehen durch das Ineinandergreifen von mindestens zwei Verbindungspartnern. Zumindest in einer (ersten) Richtung ist also ein Formschluss herstellbar, wobei auch bei Formschluss in einer ersten Richtung gleichzeitig in andere Richtungen (z.B. senkrecht zur ersten Richtung und/oder entgegen der ersten Richtung) kein Formschluss vorliegen muss. Zweckmäßig ist die Verbindung eine zumindest in Hubrichtung formschlüssig ausbildbare Verbindung. Die Hubrichtung ist dabei die Richtung parallel zur Längsachse, in die der Kolben zumindest beim Auspressen und/oder Auswerfen angehoben wird. Der Ausdruck "Richtung der bzw. parallel zur Längsachse" bezeichnet sowohl die Hubrichtung als auch die dazu entgegengesetzte Richtung, wobei für die Funktion unerhebliche Abweichungen mit umfasst sein sollen.

Erfindungsgemäß ist die formschlüssige Verbindung reversibel arretierbar und wieder lösbar durch eine Verschiebung der Kolbenstange und des Brühtopfs relativ zueinander in Richtung der Längsachse des Brühtopfs bzw. der Kolbenstange. Die Verbindung kann insbesondere derart arretierbar sein, dass zumindest in Hubrichtung wirkende Kräfte formschlüssig vom Brühtopf auf die Kolbenstange übertragbar sind. Eine solche Ausgestaltung der Verbindung der Kolbenstange und des Brühtopfs ist in der Lage, im arretierten Zustand vergleichsweise hohe Kräfte zum Auspressen des Brühguts vom Brühtopf auf die Kolbenstange zu übertragen, ohne dass die Verbindung selbst viel Bauraum benötigt.

Erfindungsgemäß ist die Verbindung derart eingerichtet, dass die Verbindung in der Drainageposition arretierbar ist. Damit kann der Kolben dem Brühkolben beim Nachpressen ein Gegenlager bieten, ohne sich dabei - wie in der Brühposition - am Brühtopfboden abzustützen. Damit kann eine motorisch angetriebene Arretierung des Kolbens in der Drainageposition entfallen.

Die Getränkezubereitungsmaschine kann eingerichtet sein, insbesondere mit dem Kolben in der Drainageposition bei arretierter Verbindung gleichzeitig den Brühtopf und die Kolbenstange in Richtung der Längsachse relativ zu dem Brühkolben zu verschieben. Vorteilhaft bewegen sich dabei gleichzeitig der Brühtopf und die Kolbenstange nicht relativ zueinander.

Gemäß einer bevorzugten Ausgestaltung kann die Verbindung eine reversibel verrastbare Rastverbindung bzw. Schnappverbindung (nachstehend vereinfachend als "Rastverbindung" bezeichnet, wobei der Begriff "Schnappverbindung" darin enthalten sein soll). Reversible verrastbare bzw. lösbare Rastverbindungen umfassen Funktionselemente zum lösbaren formschlüssigen Fügen von Bauteilen. Insbesondere kann bei einer solchen Rastverbindung in der Drainageposition ein Rasthaken eine Rastnase hintergreifen. Der Rasthaken und die Rastnase können dabei jede geeignete Form aufweisen. Beispielsweise kann die Rastnase durch einen Vorsprung oder durch eine eingreifbare Aussparung ausgebildet werden. Alternativ kann sich ein Fügeteil elastisch verformen und anschließend lösbar mit einem anderen Bauteil verhaken.

In einer anderen, bevorzugten Ausgestaltung ist die Rastverbindung eingerichtet, in einer Freigabeposition des Brühtopfs einen kippbaren bzw. drehbaren Rasthaken der Rastverbindung durch einen Freigabeanschlag in einer Position zu halten, in der der Rasthaken nicht in die Rastnase eingreift. Die Freigabeposition ist zweckmäßig eine Position, in der die Rastverbindung gelöst bzw. freigegeben ist, so dass sich die Kolbenstange relativ zum Brühtopf und entgegen der Hubrichtung bewegen kann.

Zweckmäßig kann der Verfahrweg des Brühtopfs durch das Anschlagen des Rasthakens an den Freigabeanschlag begrenzt sein. Der Freigabeanschlag kann also ausgebildet sein, die Bewegung des Brühtopfs so zu begrenzen, dass die Freigabeposition die untere bzw. erste Endposition des Verschiebewegs bzw. Verfahrwegs des Brühtopfs ist. Die Verschiebung in Hubrichtung kann durch den Brühkolben begrenzt werden, der dann die obere bzw. zweite Endposition des Verfahrwegs des Brühtopfs festlegt. Der Freigabeanschlag kann bevorzugt der hier offenbarte Anschlag sein.

Der Rasthaken kann insbesondere ein im Wesentlichen L-förmiger Rasthaken sein. Der Rasthaken kann insbesondere derart gestaltet sein, dass der Rasthaken zur Rastnase hin kippt, falls der Rasthaken nicht an dem Freigabeanschlag anliegt. Der Freigabeanschlag verhindert also bei anliegendem Rasthaken ein Kippen des Rasthakens zur Rastnase hin.

Bevorzugt kann an der Kolbenstange die Rastnase vorgesehen sein. Ferner bevorzugt kann der Rasthaken ein mit dem Brühtopf insbesondere starr, bevorzugt über mindestens ein Verbindungselement verbundener und um eine Achse drehbarer bzw. kippbarer Rasthaken sein.

Die Verbindung kann derart ausgestaltet sein, dass eine erste Verschiebung der Kolbens Stange und des Brühtopfs relativ zueinander die Verbindung arretiert, wohingegen eine auf die erste Verschiebung folgende zweite Verschiebung der Kolbenstange und des Brühtopfs relativ zueinander die Verbindung freigibt. Dabei können in einer Ausgestaltung die erste und zweite Verschiebung gleich sein, d. h. dieselbe Richtung und denselben Verschiebeweg aufweisen.

Die Getränkezubereitungsmaschine kann einen Mechanismus mit einem um die Längsachse drehbaren Element aufweisen, wobei der Mechanismus eingerichtet ist, durch die Verschiebung der Kolbenstange und des Brühtopfs relativ zueinander und mit Hilfe des rotierenden Elements die Verbindung in der Drainageposition zu arretieren oder zu lösen. Mithin ist also der Mechanismus derart ausgebildet, dass der Kolben durch das drehbare Element überführbar ist
i) in der im Vergleich zur Brühposition vorgeschobenen und feststellbaren Drainageposition; und
ii) in der im Vergleich zur Drainageposition zurückgezogenen Brühposition.

Die Verbindung der Getränkezubereitungsmaschine kann also so ausgebildet sein wie die Mechanik eines Kugelschreibers, die durch mehrmaligen Betätigungsdruck in dieselbe Richtung unterschiedliche Positionen bewirkt.

Die Getränkezubereitungsmaschine umfasst regelmäßig mindestens einen Aktuator zum Bewegen des Brühtopfs in einer Richtung parallel zu seiner Längsachse. Nicht zwingend, aber bevorzugt kann die Getränkezubereitungsmaschine einen rotatorischen Anschlag zum Begrenzen der Bewegung des Brühtopfs aufweisen. Bevorzugt ist jedenfalls ein translatorischer Anschlag eingerichtet, die Bewegung des Kolbens in einer Richtung parallel zur Längsachse der Kolbenstange zu begrenzen, insbesondere entgegen der Hubrichtung. Der Anschlag ist zweckmäßig mit dem Gehäuse der Getränkezubereitungsmaschine verbunden und kann raumfest oder verschiebbar oder ebenfalls schwenkbar ausgebildet sein. Der Aktuator und der Anschlag sind eingerichtet, die Kolbenstange und den Brühtopf ohne weitere Aktuatoren relativ zueinander und relativ zum Brühkolben zu verschieben. Insbesondere sind der Anschlag und der Aktuator eingerichtet, durch Verschiebung der Kolbenstange und des Brühtopfs relativ zueinander die Verbindung zu arretieren, insbesondere in der Drainageposition, oder zu lösen.

Zweckmäßig sind der Brühtopf und die Kolbenstange zusammen schwenkbar ausgebildet. Zweckmäßig verläuft die Schwenkachse im Wesentlichen (d. h. mit für die Funktion nur unerheblicher Abweichung) parallel zur Längsachse des Brühtopfs, um zwischen einer Brühposition als erster Position und einer Befüllposition als zweiter Position zu wechseln.

Sowohl in der ersten Position als auch in der zweiten Position kann der Rasthaken an dem Anschlag anliegen. In der ersten Position kann die Verschiebung der Kolbenstange entgegen der Hubrichtung des Brühtopfs durch den Anschlag begrenzbar sein. In der zweiten Position kann die Verschiebung der Kolbenstange entgegen der Hubrichtung des Brühtopfs durch den Anschlag auch nicht begrenzbar sein. Vorteilhaft kann somit in der zweiten Position der Kolben die Befüllposition einnehmen, so dass in der zweiten Position befüllt werden kann.

Die Kolbenstange kann einen Zahnstangenabschnitt umfassen. Ferner kann ein Zahnradabschnitt an der Getränkezubereitungsmaschine und insbesondere am Brühtopf vorgesehen sein. Der Zahnradabschnitt ist bevorzugt mit dem Brühtopf und mit ihm insbesondere starr verbunden und um eine Achse drehbar ausgebildet. Der Zahnradabschnitt kann derart ausgebildet sein, dass er in den Zahnstangenabschnitt eingreift und beim Verschwenken des Brühtopfs samt Kolbenstange deren Verschiebung relativ zum Brühtopf bewirkt.

Das Prinzip der Erfindung wird im Folgenden anhand einer Zeichnung beispielshalber noch näher erläutert. In der Zeichnung zeigen:
- Figur 1:: eine schematische Schnittansicht einer Brühkammer nach der Verriegelung für das anschließende Nachpressen,
- Figur 2:: eine Schnittansicht der Brühkammer in der Auswurfposition A, und
- Figur 3:: eine Schnittansicht der Brühkammer in der Befüllposition.

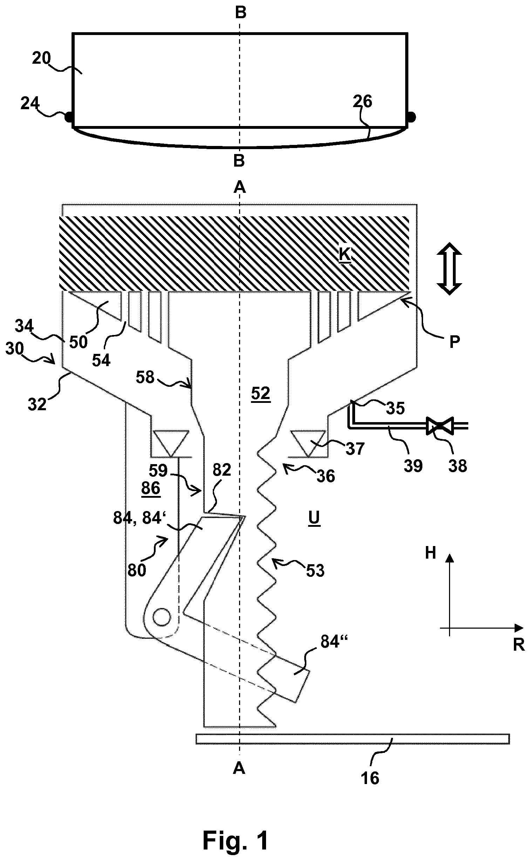

Die Figur 1 zeigt eine schematische Schnittansicht einer Brühkammer oder eines Brühtopfs 30 nach der Verriegelung für ein anschließendes Nachpressen. Der Brühtopf 30 umfasst einen trichterförmigen Brühtopfboden 32 und eine zylindrische Brühtopfseitenwand 34. In den Brühtopf 30 lässt sich von dessen Oberseite aus ein zylindrischer Brühkolben 20 einfahren, um den Brühtopf 30 insbesondere bei einem Brühvorgang zu verschließen. Die Längsachse A-A des Brühtopfs 30 ist im Wesentlichen senkrecht und in Figur 1 im Wesentlichen daher konzentrisch zur Längsachse B-B des Brühkolbens 20 angeordnet. Der Brühkolben 20 umfasst eine Brühkolbendichtung 24 und ein Brühsieb 26. Weitere Komponenten wie beispielsweise ein Brühventil sind vereinfachend nicht gezeigt. Der Brühtopf 30 ist in Richtung der Längsachse A-A, d.h. in Hubrichtung H oder in die entgegengesetzte Richtung, verschiebbar ausgebildet, wie mit dem Doppelpfeil angedeutet ist.

Am Brühtopfboden 32 ist ein Brühwassereinlass 35 vorgesehen. Der Brühwassereinlass 35 könnte ebenso in der Brühwasserseitenwand 34 vorgesehen sein. Ein an den Brühwassereinlass 35 anschließender Leitungsabschnitt 39 ist Bestandteil eines Fluidsystems zur Bereitstellung von Brühwasser über ein Ventil 38.

Der Brühtopf 30 enthält bodenseitig einen an einer Kolbenstange 52 vertikal verschiebbaren Kolben 50 zum Auspressen und zum oberseitigen Ausstoßen von Brühgut bzw. Trester K aus dem Brühtopf 30. Er umfasst Restwasserlöcher 54, durch die während des Auspressens Restwasser aus dem Brühgut K ausströmen kann. Alternativ oder zusätzlich kann ein Ringspalt zwischen dem Brühtopf 30 und dem Kolben 50 der Entwässerung dienen. Die Unterseite des Kolbens 50 weist eine Form auf, die im Wesentlichen mit der Form des trichterförmigen Brühtopfbodens 32 korrespondiert. Die Oberseite des Kolbens 50 verläuft weitgehend eben.

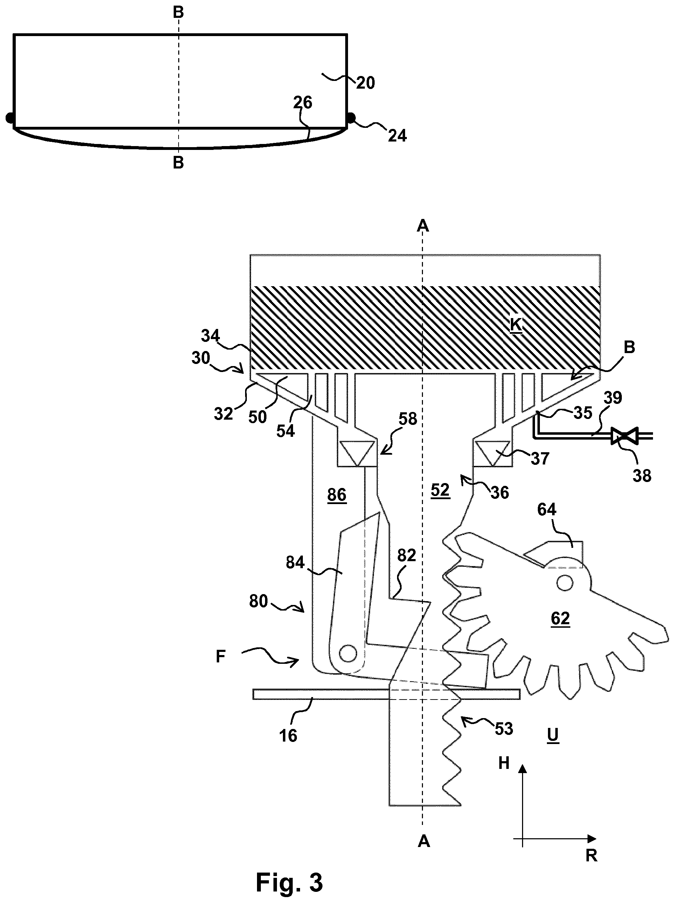

In der Mitte des Brühtopfbodens 32 ist ein Drainageauslass 36 vorgesehen. Der Drainageauslass 36 wird von einem Durchgangsloch gebildet, durch das die Kolbenstange 52 des Kolbens 50 hindurchgeführt ist. Der Drainageauslass 36 ist an der tiefsten Stelle des Brühtopfs 30 vorgesehen. Im Umfangsbereich des Drainageauslasses 36 befindet sich eine Dichtung 37, die zusammen mit einem durchmessergrößeren Dichtbereich 58 an der Kolbenstange 52 den Drainageauslass 36 verschließen kann (vgl. Figur 3). Der Dichtbereich 58 und die Dichtung 37 können auch anders ausgebildet sein. Beispielsweise kann der Dichtbereich 58 selbst als Konus ausgebildet sein und in einen durchmesserkleineren Drainage- oder verjüngten Bereich 59 darunter überzugehen.

In der Figur 1 ist der Kolben 50 in der Drainageposition P gezeigt. Die Unterseite des Kolbens 50 ist dabei derart beabstandet von der Oberfläche des Brühtopfbodens 32, dass sich zwischen der Unterseite des Kolbens 50und der Oberflächen des Brühtopfbodens 32 ein Restwasser-Abflusskanal ausbildet.

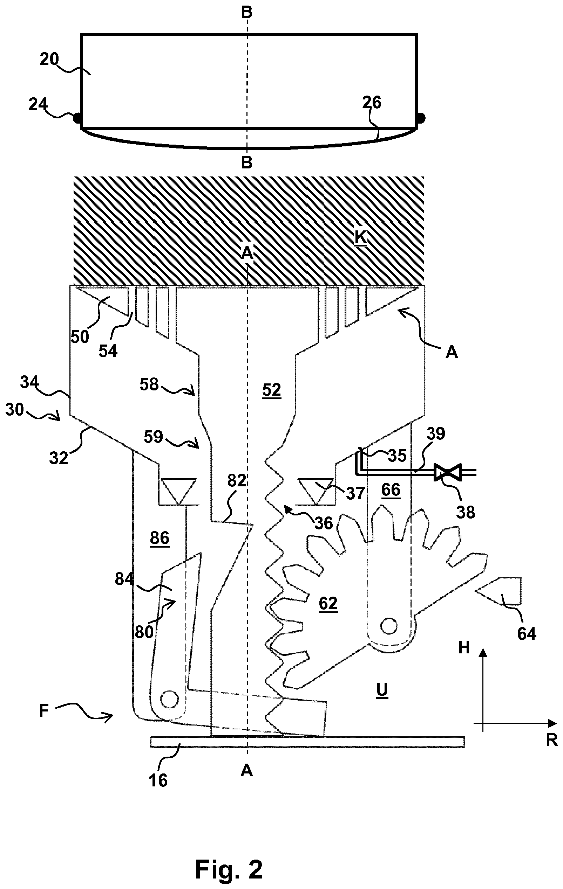

Vom Brühtopf 30 steht unterseitig ein stabförmiges Verbindungselement 86 ab. An ihm ist ein L-förmiger Rasthaken 84 drehbar bzw. kippbar gelagert. In der Kolbenstange 52 ist durch eine keilförmige Einbuchtung eine Rastnase 82 ausgebildet. Der Rasthaken 84 bildet zusammen mit der Rastnase 82 eine unidirektional formschlüssige Verbindung aus, die als Rastverbindung 80 ausgebildet ist. Durch die starre Anbindung des Rasthakens 84 an den Brühtopf 30 durch das Verbindungselement 86 führt der Drehpunkt des Rasthakens 84 dieselbe translatorische Bewegung durch wie der Brühtopf 30. Der Rasthaken 84 ist derart ausgebildet, dass der Rasthaken 84 mit seinem in die Rastnase 82 einrastbaren ersten Ende 84' zur Rastnase 82 hin kippt, sobald der Brühtopf 30 sich aus der Freigabeposition F (vgl. Figur 2) heraus in Hubrichtung H bewegt. Vorteilhaft befindet sich der Schwerpunkt des Rasthakens 84 in der Einbaulage zwischen der Drehachse des Rasthakens 84 und der Drehachse des Zahnradabschnittes 62. Alternativ kann der Rasthaken 84 in eine Vorzugslage federvorgespannt sein. In der in Figur 1 dargestellten Drainageposition P des Kolbens 50 greift der Rasthaken 84 in die Rastnase 82 ein.

An der Kolbenstange 52 ist an der dem Rasthaken 84 gegenüberliegenden Seite ein Zahnstangenabschnitt 53 vorgesehen, der mit einem halbkreisförmigen Zahnradabschnitt 62 (nur Fig. 2, 3) kämmt. Der Zahnradabschnitt 62 ist über das Verbindungselement 66 gegenüber dem Brühtopf 30 ortsfest, aber drehbar gelagert. Wird der Brühtopf 30 in bzw. entgegen der Hubrichtung H bewegt, so vollzieht die Drehachse des Zahnradabschnitts 62 dieselbe translatorische Bewegung mit.

In Figur 1 schiebt ein Antrieb den Brühtopf 30 in Hubrichtung H aufwärts. Die Rastverbindung 80 nimmt dabei den Kolben 50 mit und hält ihn in einer Drainageposition P in einem Abstand zum Brühtopfboden 32. Wird nun der Brühtopf 30 weiter gegen den Brühkolben 20 geschoben und erreicht jener das Brühgut K, kann ihm der Kolben 50 nicht ausweichen, sondern stützt sich - statt auf dem Brühtopfboden 32 wie beim Brühen - nun auf der Rastverbindung 80 ab. Damit bleibt eine Passage zwischen seiner Unterseite und der Oberseite des Brühtopfbodens 32 frei. Verpresst zwischen dem Brühkolben 20 und dem Kolben 30 gibt das Brühgut K Restwasser ab, das durch die Restwasserlöcher 54 hindurch auf den trichterförmigen Brühtopfboden 32 gelangt. Jener leitet es zum Drainageauslass 36, der aufgrund des ihn durchragenden verjüngten Bereichs 59 fluidoffen ist. Somit kann nicht nur das Restwasser ungehindert in die Umgebung U abfließen, sondern auch Luft in den Brühtopf 30 einströmen. Etwaige weitere Einrichtungen, wie beispielsweise eine Restwasser-Auffangschale, wurden vereinfachend weggelassen.

Zum Auswerfen des verpressten und nun trockenen Brühguts K schiebt es der Kolben 50 oberseitig aus dem Brühtopf 30 zum Abstreifen heraus. Dazu wird der Brühtopf 30 entgegen der Hubrichtung H abgesenkt, während die Kolbenstange 52 durch einen waagrechten und horizontal bewegbaren Anschlag 16 unter ihr festgehalten wird. Figur 2 zeigt den gegenüber dem Brühtopf 30 maximal aufwärts ausgelenkten Kolben 50 in seiner Auswurfposition A, dessen Kolbenoberfläche bündig mit dem Rand der Brühtopfseitenwand 34 abschließt.

Unter der Kolbenstange 52 liegt der Anschlag 16, auf dem ein zweites Ende 84" des Rasthakens 84 (s. Figur 2) beim Absenken des Brühtopfs 30 aufsetzt. Er löst die Rastverbindung 80 und überführt sie in ihre deaktivierte oder Freigabeposition F. Jetzt kann der Kolben 50 wieder in den Brühtopf 30 eingefahren werden, um eine Befüllposition B gemäß Figur 3 einzunehmen.

Dazu verschwenkt ein nicht gezeigter Aktuator den Brühtopf 30 samt Kolben 50, Zahnradabschnitt 62 und deaktivierter Rastverbindung 80 in einer Rotationsrichtung R um eine nicht gezeigte vertikale Schwenkachse parallel zur Längsachse A-A in Figur 2 nach rechts. Die Verschwenkbewegung lässt einen gehäusefesten Zahnradanschlag 64 (nur Fig. 2, 3) in Anlage an den Zahnradabschnitt 62 kommen und versetzt ihn in Rotation. Da der Zahnradabschnitt 62 mit dem Zahnstangenabschnitt 53 kämmt, verursacht er eine Abwärtsbewegung der Kolbenstange 52 entgegen der Hubrichtung H relativ zum vertikal nicht verschobenen Brühtopf 30. Die Längsachse A-A des Brühtopfs 30 verläuft nun exzentrisch gegenüber der Längsachse B-B des Brühkolbens 20, womit frisches Brühgut K in den Brühtopf 30 einfüllbar ist.

Durch die Verrastung wird die Relativbewegung zwischen der Kolbenstange 52 und dem Brühtopf 30 unterbrochen. Vielmehr bewegen sich nach der Verrastung die Kolbenstange 52 und der Brühtopf 30 mit gleicher Geschwindigkeit in Hubrichtung H zum Brühkolben 20 hin. Das Brühgut K wird schließlich in einer nicht gezeigten Brühstellung gegen den Brühkolben 20 gepresst.

Schwenkt nach dem Befüllvorgang der Brühtopf 30 aus der in Figur 3 gezeigten Position entgegen der Rotationsrichtung R zurück unter den Brühkolben 20, so bleibt die Kolbenstange 52 weiterhin in der abgesenkten Position wie in der Figur 3 gezeigt. Nun wird der Brühtopf 30 in Hubrichtung H zum Verpressen des Brühguts K angehoben. Dabei liegt der Kolben 50 weiterhin auf dem Brühtopfboden 34 auf und stützt sich dort ab. Nach dem Verpressen des Brühguts K erfolgt der Brühvorgang. Während dessen ist das erste Ende 84' des Rasthakens 84 weiterhin oberhalb der Rastnase 82 angeordnet, die Rastverbindung 80 also deaktiviert. Erst nach Abschluss des Brühvorgangs wird der Brühtopf 30 wieder entgegen der Hubrichtung H abgesenkt. Schon während des Anhebens des Brühtopfs 30 oder spätestens jetzt wird der Anschlag 16 unter den Brühtopf 30 verschoben. Er begrenzt daher die Bewegung der Kolbenstange 52 entgegen der Hubrichtung H, und es kommt zu einer Relativbewegung von Kolbenstange 52 und Brühtopf 30, da der Brühtopf 30 weiterhin abgesenkt wird. Bewegt sich nun der Brühtopf 30 samt Verbindungselement 86 entgegen der Hubrichtung H abwärts, so gleitet das erste Ende 84' an der Oberfläche der Kolbenstange 52 entlang, bis das Ende 84' unter die Rastnase 82 kippt. Anschließend kann das Nachpressen beginnen, das bereits im Zusammenhang mit der Figur 1 erläutert wurde.

Eine nicht gezeigte Drehfeder am Zahnradabschnitt 62 kann den Kolben 50 relativ zum Brühtopf 30 anheben und damit den Drainageauslass 36 öffnen, noch bevor die Kolbenstange 52 auf dem Anschlag 16 aufsetzt. Dadurch kann ein Luftzutritt durch die Drainageöffnung 36 hindurch den Aufbau eines Unterdrucks im Brühtopf 30 verhindern.

Da es sich bei den vorhergehenden, detailliert beschriebenen Figuren 1 bis 3 um ein Ausführungsbeispiel handelt, kann es in üblicher Weise vom Fachmann in einem weiten Umfang modifiziert werden, ohne den Bereich der Erfindung zu verlassen. Insbesondere kann auch die konkrete Ausgestaltung der Figuren 1 bis 3 in anderer Form als in der hier beschriebenen erfolgen. Weiterhin schließt die Verwendung der unbestimmten Artikel "ein" bzw. "eine" nicht aus, dass die betreffenden Merkmale auch mehrmals oder mehrfach vorhanden sein können. Ebenso schließen die Begriffe "Einheit" und "Modul" nicht aus, dass diese auch aus mehreren, gegebenenfalls auch räumlich getrennten, Untereinheiten bestehen. Der Begriff "im Wesentlichen" (z.B. "im Wesentlichen senkrechte Achse") umfasst jeweils die genaue Eigenschaft bzw. den genauen Wert (z.B. "senkrechte Achse") sowie jeweils für die Funktion der Eigenschaft/ des Wertes unerhebliche Abweichungen (z.B. "tolerierbare Abweichung von senkrechte Achse").

### Bezugszeichenliste

- 16: Anschlag
- 20: Brühkolben
- 24: Brühkolbendichtung
- 26: Brühsieb
- 30: Brühtopf
- 32: Brühtopfboden
- 34: Brühtopfseitenwand
- 35: Brühwassereinlass des Brühtopfs
- 36: Drainageauslass
- 37: Dichtung
- 38: Ventil
- 39: Leitungsabschnitt des Fluidsystems
- 50: Kolben
- 52: Kolbenstange des Kolbens
- 53: Zahnstangenabschnitt
- 54: Restwasserloch
- 58: Dichtbereich der Kolbenstange
- 59: verjüngter Bereich
- 62: Zahnradabschnitt
- 64: Zahnradanschlag
- 66: Verbindungselement
- 80: Rastverbindung
- 82: Rastnase
- 84: kippbarer Rasthaken
- 84': erstes Ende
- 84": zweites Ende
- 86: Verbindungselement

- A: Auswurfposition des Kolbens
- A-A: Längsachse des Brühtopfs
- B: Befüllposition des Kolbens
- F: Freigabeposition
- H: Hubrichtung
- K: Brühgut
- P: Drainageposition des Kolbens
- U: Umgebung

## Patentansprüche

1. Getränkezubereitungsmaschine, umfassend:
- einen Brühtopf (30) zur Aufnahme von Brühgut (K), und
- einen relativ zum Brühtopf (30) verschiebbaren Kolben (50) zum Auswerfen des Brühguts (K),
- einen Drainageauslass (36) im Brühtopf (30) zur Drainage von Restwasser aus dem Brühtopf (30),
- wobei der Kolben (50) dazu eingerichtet ist,
i) in einer Drainageposition (P) des Kolbens (50) den Drainageauslass (36) freizugeben und
ii) in einer Brühposition (B) des Kolbens (50) den Drainageauslass (36) zu verschließen,
wobei der Brühtopf (30) einen Brühtopfboden (32) aufweist, wobei der Kolben (50) eine Kolbenstange (52) umfasst, die durch ein im Brühtopfboden (32) vorgesehenes Durchgangsloch hindurchgeführt ist und wobei das Durchgangsloch zugleich den Drainageauslass (36) ausbildet,
wobei die Kolbenstange (52) und der Brühtopf (30) dazu eingerichtet sind, eine zumindest unidirektional formschlüssige Verbindung (80) auszubilden, wobei die Verbindung (80) arretierbar und lösbar ist durch eine Verschiebung der Kolbenstange (52) und des Brühtopfs (30) relativ zueinander in Richtung einer Längsachse (A-A) des Brühtopfs (30),
**dadurch gekennzeichnet, dass** die Verbindung (80) in der Drainageposition (P) formschlüssig arretierbar ist.

2. Getränkezubereitungsmaschine nach Anspruch 1, wobei der Drainageauslass (36) an der tiefsten Stelle des Brühtopfs (30) vorgesehen ist.

3. Getränkezubereitungsmaschine nach Anspruch 1 oder 2 , die dazu eingerichtet ist, bei arretierter Verbindung (80) gleichzeitig den Brühtopf (30) und die Kolbenstange (52) in Richtung der Längsachse (A-A) relativ zu einem Brühkolben (20) der Getränkezubereitungsmaschine zu verschieben.

4. Getränkezubereitungsmaschine nach einem der vorherigen Ansprüche 1 bis 3, wobei die Verbindung (80) eine reversibel verrastbare Rastverbindung (80) ist.

5. Getränkezubereitungsmaschine nach einem der vorherigen Ansprüche 1 bist 4, wobei die Verbindung (80) derart ausgestaltet ist, dass eine erste Verschiebung von Kolbenstange (52) und Brühtopf (30) relativ zueinander die Verbindung (80) arretiert, und dass eine auf die erste Verschiebung folgende zweite Verschiebung von Kolbenstange (52) und Brühtopf (30) relativ zueinander die Verbindung (80) freigibt, wobei bevorzugt die erste und zweite Verschiebung gleich sind.

6. Getränkezubereitungsmaschine nach einem der vorherigen Ansprüche 1 bis 5, ferner umfassend:
- einen Aktuator zum Bewegen des Brühtopfs (30), und
- einen Anschlag (16) zum Begrenzen der Bewegung des Kolbens (50) in Richtung der Längsachse (A-A).

7. Getränkezubereitungsmaschine nach Anspruch 6, wobei der Aktuator und der Anschlag (16) eingerichtet sind, durch Verschiebung der Kolbenstange (52) und des Brühtopfs (30) relativ zueinander die Verbindung (80) zu arretierten oder zu lösen.

## Claims

1. Beverage machine comprising:
- a brewing pot (30) for receiving brewing material (K), and
- a piston (50) which can be displaced relative to the brewing pot (30) for ejecting the brewing material (K),
- a drainage outlet (36) in the brewing pot (30) for draining residual water from the brewing pot (30),
- wherein the piston (50) is designed to
i) release the drainage outlet (36) in a drainage position (P) of the piston (50) and
ii) close the drainage outlet (36) in a brewing position (B) of the piston (50),
wherein the brewing pot (30) has a brewing pot base (32), wherein the piston (50) comprises a piston rod (52) which is passed through a through hole provided in the brewing pot base (32) and wherein the through hole at the same time forms the drainage outlet (36),
wherein the piston rod (52) and the brewing pot (30) are designed to form an at least unidirectional form-fit connection (80), wherein the connection (80) can be locked and released by a displacement of the piston rod (52) and the brewing pot (30) relative to one another in the direction of a longitudinal axis (AA) of the brewing pot (30), **characterised in that** the connection (80) can be locked in the drainage position (P) in a form-fit manner.

2. Beverage machine according to claim 1, wherein the drainage outlet (36) is provided at the lowest point of the brewing pot (30).

3. Beverage machine according to claim 1 or 2, which is designed to simultaneously displace the brewing pot (30) and the piston rod (52) in the direction of the longitudinal axis (A-A) relative to a brewing piston (20) of the beverage machine when the connection (80) is locked.

4. Beverage machine according to one of the preceding claims 1 to 3, wherein the connection (80) is a reversibly latchable latching connection (80).

5. Beverage machine according to one of the preceding claims 1 to 4, wherein the connection (80) is configured such that a first displacement of the piston rod (52) and brewing pot (30) relative to one another locks the connection (80), and that a second displacement of the piston rod (52) and brewing pot (30) relative to one another following on from the first displacement releases the connection (80), wherein the first and second displacement are preferably the same.

6. Beverage machine according to one of the preceding claims 1 to 5, further comprising:
- an actuator for moving the brewing pot (30), and
- a stop (16) for limiting the movement of the piston (50) in the direction of the longitudinal axis (A-A).

7. Beverage machine according to claim 6, wherein the actuator and the stop (16) are designed to lock or release the connection (80) by displacing the piston rod (52) and the brewing pot (30) relative to one another.

## Revendications

1. Machine à préparer des boissons, comprenant:
- un pot d'échaudage (30) pour l'accueil de denrées à échauder (K), et
- un piston (50) déplaçable par rapport au pot d'échaudage (30) pour l'éjection de la denrée à échauder (K),
- une sortie de drainage (36) dans le pot d'échaudage (30) pour le drainage de l'eau résiduelle en dehors du pot d'échaudage (30),
- dans laquelle le piston (50) est aménagé,
i) afin de libérer la sortie de drainage (36) dans une position de drainage (P) du piston (50) et
ii) afin d'obturer la sortie de drainage (36) dans une position d'échaudage (B) du piston (50), dans laquelle le pot d'échaudage (30) présente un fond de pot d'échaudage (32), dans laquelle le piston (50) comprend une tige de piston (52) menée à travers un orifice de passage prévu dans le fond du pot d'échaudage (32) et dans laquelle l'orifice de passage forme en même temps la sortie de drainage (36), dans laquelle la tige de piston (52) et le pot d'échaudage (30) sont aménagés afin de former une liaison (80) par complémentarité de formes au moins unidirectionnelle (80), dans laquelle la liaison (80) peut être bloquée et est amovible via un déplacement de la tige de piston (52) et du pot d'échaudage (30) l'un par rapport à l'autre en direction d'un axe longitudinal (A-A) du pot d'échaudage (30), **caractérisée en ce que** la liaison (80) peut être bloquée par complémentarité de formes dans la position de drainage (P).

2. Machine à préparer des boissons selon la revendication 1, dans laquelle la sortie de drainage (36) est prévue en le point le plus bas du pot d'échaudage (30).

3. Machine à préparer des boissons selon la revendication 1 ou 2, aménagée afin de déplacer, en présence d'une liaison (80) bloquée, simultanément le pot d'échaudage (30) et la tige de piston (52) en direction de l'axe longitudinal (A-A) par rapport à un piston d'échaudage (20) de la machine à préparer des boissons.

4. Machine à préparer des boissons selon l'une des revendications 1 à 3 précédentes, dans laquelle la liaison (80) est une liaison par encliquetage (80) encliquetable réversible.

5. Machine à préparer des boissons selon l'une des revendications 1 à 4 précédentes, dans laquelle la liaison (80) est agencée de telle sorte qu'un premier déplacement de la tige de piston (52) et du pot d'échaudage (30) l'un par rapport à l'autre bloque la liaison (80) et en ce qu'un deuxième déplacement, suivant le premier, de la tige de piston (52) et du pot d'échaudage (30) l'un par rapport à l'autre libère la liaison (80), dans laquelle le premier et le deuxième déplacement sont de préférence identiques.

6. Machine à préparer des boissons selon l'une des revendications précédentes 1 à 5, comprenant en outre :
- un actionneur pour le déplacement du pot d'échaudage (30), et
- une butée (16) pour la limitation du déplacement du piston (50) en direction de l'axe longitudinal (A-A).

7. Machine à préparer des boissons selon la revendication 6, dans laquelle l'actionneur et la butée (16) sont aménagés afin de bloquer ou de rompre la liaison (80) via le déplacement de la tige de piston (52) et du pot d'échaudage (30) l'un par rapport à l'autre.
